# EUROPÄISCHE PATENTSCHRIFT

(11) **EP 1 369 628 B1**
(45) Veröffentlichungstag und Bekanntmachung des Hinweises auf die Patenterteilung: **07.09.2005**
(21) Anmeldenummer: 03011396.3
(22) Anmeldetag: 20.05.2003
(51) Int. Cl.: F16K 17/16, A62C 4/02

(54) **Druckentlastungsvorrichtung mit Berstscheibe**
Pressure relief device with a rupture disc
Dispositif de dépressurisation avec un disque de rupture

(30) Priorität: 03.06.2002 DE 20208576 U
(43) Veröffentlichungstag der Anmeldung: 10.12.2003
(73) Patentinhaber: Brilex Gesellschaft für Explosionsschutz mbH, 59929 Brilon (DE)
(72) Erfinder: Bunse, Martin, 59929 Brilon (DE)
(74) Vertreter: Grundmann, Dirk

(56) Entgegenhaltungen:
- EP-A- 0 256 239
- EP-A- 1 044 703
- DE-A- 3 822 012
- US-A- 2 801 768
- US-A- 3 394 843
- US-A- 4 013 190
- US-A- 4 328 901
- US-A- 4 484 690
- US-A- 5 191 990

## Beschreibung

Die Erfindung bezieht sich auf eine Druckentlastungsvorrichtung mit einer eine Öffnung eines Behälters oder dergleichen verschließenden Berstscheibe, die bei Überschreiten einer vorbestimmten Druckdifferenz in einen Hohlraum eines behälteraußenseitig angeordneten Korbes öffnet, dessen gasdurchlässige Wände durch Wärmeabfuhr flammsperrend wirken.

Zum Stand der Technik sei beispielsweise auf die DE 3822012 A1 verwiesen. Das dortige Wirkprinzip basiert auf "Flammenschneiden (quenching)". Der Berstscheibe nachgeschaltet ist ein Hohlraum, gemäß Schilderung verschlossen durch wellenartig ausgeformte Schichten aus Stein - bzw. Glaswolle sowie aus perforierten Metallschichten, zusammen bildend die gasdurchlässigen Wände.

Aus der CH 521534 existiert eine ventilartige Explosions-Entlastungsvorrichtung, stellend eine Flammenschranke durch übereinander angeordnete, gewendelte Blechbahnen, die über einen Teil der Lagenbreite gewellt ausgebildet sind. Das führt zu einer radialgerichtete Durchlässe unterschiedlichen Querschnittes bringenden Kräuselstruktur, an die die unverformte Restbreite in Steigerichtung beabstandet lamellenartig anschließt (Wärmeaustauscherprinzip).

Aus US 3,394,843 ist eine Druckentlastungs nach dem Oberbegriff des Anspruchs 1 bekannt.

In Kenntnis dieser Vorgaben hat sich die Erfindung zur Aufgabe gestellt, eine gattungsgemäße Druckentlastungsvorrichtung von hochgradigem Wärmeabtrag zu schaffen.

Diese Aufgabe ist zunächst und im Wesentlichen bei einer Druckentlastungsvorrichtung mit den Merkmalen des Anspruches 1 gelöst, wobei darauf abgestellt ist, dass die gasdurchströmbaren Wände außenseitig als grobmaschiges Gitter ausgebildet sind, die von offenporigem Metallschaum hinterlegt sind.

Das führt zu einer hochwirksamen Flammensperre. Der aus dem Explosionsdruck entstehenden, plötzlichen Raumforderung ist durch aufklappendes Wegschlagen der Berstscheibe nach innen Rechnung getragen; gleichwohl schlagen Flamme und Staub nicht durch die Wände des Korbes hindurch nach außen. Vielmehr "erstickt" die Flamme auf dem Weg durch den offenporigen Metallschaum. Beim Durchströmen desselben wird dem Reaktionsgemisch nämlich bis zum Durchtritt auf die Außenseite des Korbes so viel Wärme entzogen, dass die Mindestzündenergie unterschritten wird. Die Folge ist das Ablöschen der Flamme. Der Metallschaum bietet eine homogene Struktur mit polydirektionalen Stegen der Poren. Das grobmaschige Gitter der durchströmbaren Wände bringt außer dem Durchtritt des ausgelöschten Reaktionsgemisches zugleich eine willkommene Stabilisierung des Korbes. Das Gitter wirkt gleichsam als reifartige, periphere Bandage des gesamten Gehäuses.

Die Gegenstände der weiteren Ansprüche sind nachstehend in Bezug zu dem Gegenstand des Anspruches 1 erläutert, können aber auch in ihrer Unabhängigen Formulierung von Bedeutung sein. So wird vorgeschlagen, dass der Korb ein quaderförmiges, fünfseitig gasdurchlässiges Gehäuses ist. Das Ganze kann selbstredend auch eine prismatische Gehäuseform erfassen, wobei auch hier die fünfte Seite die Decke des gestülpt zugeordneten Korbes bildet. Selbst zylindrische sind denkbar. Zuordnungstechnisch vorteilhaft ist die Maßnahme, gemäß der die der Berstscheibe zugeordnete Öffnung des Korbes einen Flansch ausbildet, der unter randseitigem Zwischenfassen der Berstscheibe mit einem behälterseitigen Gegenflansch verbunden ist. Die Druckentlastungsvorrichtung kann in dieser Weise statt einem Behälter einer Anlage auch einer Rohrleitung derselben zugeordnet werden, überhaupt querschnittsunterschiedlichsten Führungen des staubpartikeltragenden Gasstromes. Unter dem Gedanken einer Adapterlösung ist eine vorteilhafte Ausgestaltung erzielt durch einen der Öffnung des Korbes zugeordneten Sockel. Weiter erweist es sich als günstig, dass das grobmaschige Gitter von einer Außenplatte ausgebildet ist. Eine solche ist tragfähig gegenüber ausbauchenden Kräften und im Übrigen auch austauschbar. Unter Berücksichtigung der angedeuteten quaderförmigen Gestalt (Würfel) des Gehäuses kann von untereinander völlig gleichen Plattenzuschnitten ausgegangen werden. Auch das mit solchen Außenplatten zu versehende "Skelett" des Gehäuses ist baulich vorteilhaft erreicht, wenn das Gehäuse eine Rohrrahmenkonstruktion ist mit an den Rahmenschenkeln angeschraubten Außenplatten und zwischen den Rahmenschenkeln sich erstreckenden Metallschaum-Platten. Das Ganze ergibt ein beispielsweise dem Aquarienbau vergleichbares Rahmengebilde. Dabei ist die Dicke der Rahmenschenkel sinnvoll als Unterbringungsraum für die Metallschaum-Platten genutzt. Ein weiteres Merkmal der Erfindung besteht darin, dass die Metallschaum-Platten aus Aluminium bestehen mit einer durchschnittlichen Porenweite von 10 bis 30, vorzugsweise 20 ppi. Die Dicke der Metallschaum-Platte kann betriebsbedingt unterschiedlich gewählt werden. Als Faustregel mag dabei gelten, dass die Dicke der Metallschaum-Platte zwischen 10 und 60 mm, vorzugsweise zwischen 30 und 50 mm, ganz bevorzugt bei 40 mm liegt. Unter Berücksichtigung der zu bewältigenden Flächenbelastung und eines ausreichenden Durchlassquerschnitts ist es vorteilhaft, wenn die Außenplatte ein Rechteck-Gitter hat und eine Lochmaschenweite zwischen 30 und 40 mm. Bevorzugt sind die Maschenlöcher quadratisch ausgebildet. Weiter wird vorgeschlagen, dass die Gitterstege zwischen den Lochmaschen des Gitters eine Breite von 3 bis 5 mm aufweisen. Eine weitere Stabilisierung des Gehäuses sowie gegebenenfalls eine innere Abstützung der Metallschaum-Platten wird erzielt durch eine innere Gitterplatte mit einer geringeren Öffnungsfläche als die der Außenplatte. Hier kann eine feinere Siebstruktur greifen. Vorgesehen ist, dass die innere Gitterplatte Winkelform aufweist. Zwei solcher Gitterplatten ergänzen sich zu einer umrissmäßig geschlossenen Wandung. Schließlich wird noch vorgeschlagen, dass die inneren Gitterplatten von der Decke des Gehäuses ausgehen und sich nur über eine vertikale Teilhöhe desselben erstrecken. So ist vor allem der Dombereich des gasdurchlässigen Gehäuses intern ausgekleidet, bildend eine anfängliche strömungsschleusend wirkende, flammeinschränkende Barriere. Endlich ist eine vorteilhafte Ausgestaltung erzielt durch ein im Übergangsbereich von Metallschaum-Platte und Rahmenschenkeln der Rohrrahmenkonstruktion angeordnete Silikondichtung zwischen Metallschaum-Platte und Außenplatte. Die Silikondichtung kann, sich porenverankernd, in den Kontaktbereich der Metallschaum-Platte partiell eintreten und hält etwaige Spalten zwischen Gerüst und Füllung (Metallschaum) zu.

Der Gegenstand der Erfindung ist nachstehend anhand eines zeichnerisch veranschaulichten Ausführungsbeispieles näher erläutert. Es zeigt:
- Fig.1: die Druckentlastungsvorrichtung in Vorderansicht, partiell aufgeschnitten,
- Fig.2: eine Herausvergrößerung II aus Fig.1,
- Fig.3: die Draufsicht auf die Druckentlastungsvorrichtung, gleichfalls partiell aufgeschnitten,
- Fig.4: den Schnitt gemäß Linie IV-IV in Fig.3
- Fig.5: einen Rahmenschenkel der Rohrrahmenkonstruktion im Längsschnitt,
- Fig.6: den Schnitt gemäß Linie VI-VI in Fig.5
- Fig.7: den Schnitt gemäß Linie VII-VII in Fig.4
- Fig.8: eine Herausvergrößerung VIII der Fig.7, veranschaulichend eine Silikondichtung,
- Fig.9: einen Ausschnitt der offenporigen Metallschaum-Platte,
- Fig.10: die innere Gitterplatte, der Decke des Gehäuses zugeordnet,
- Fig.11: die Draufsicht auf einen Sockel, fungierend als Adapter zwischen dem Behälter und dem gasdurchlässigen Gehäuse der Druckentlastungsvorrichtung, zeigend eine bodenseitigen runden Durchlassquerschnitt,
- Fig.12: den Sockel in aufgebrochener Seitenansicht,
- Fig.13: eine der Figur 11 entsprechende Darstellung, zeigend einen anderen, d.h. hier rechteckigen Öffnungsquerschnitt des Sockels und
- Fig.14: eine der Fig.12 entsprechende Darstellung.

Die dargestellte Druckentlastungsvorrichtung 1 ist staubexplosionsgefährdeten Anlagen zuordbar, beispielsweise einem Behälter 2. Selbstredend kann das Andocken auch an Leitungen solcher Anlagen geschehen.

Die Druckentlastungsvorrichtung 1 steht über einer Öffnung 3 des besagten Behälters 2. Deren Weg nach außen wird durch eine Berstscheibe 4 zugehalten. Letztere hält den Eingang zu einer Flammsperre bis zum Ereignis verschlossen.

Das Ereignis besteht bei Überschreiten einer vorbestimmten Druckdifferenz, bei der die Berstscheibe 4 dann in einen Hohlraum 5 eines behälteraußenseitig angeordneten Korbes K öffnet. Der weist gasdurchlässige Wände auf.

Entsprechend der dargestellten quaderförmigen bzw. prismatischen Gestalt des den Korb K stellenden Gehäuses mit oberseitiger Decke 6 sind insgesamt fünf gasdurchströmbare Wände realisiert.

An eine der Berstscheibe 4 zugeordnete Öffnung 7 des Korbes K schließt eine horizontal nach auswärts abragender Flansch 8 an. Letzterer übergreift einen darunterliegenden Gegenflansch 9 des Behälters 2. Der obere Flansch 8 geht vom unteren Ende eines vertikal ausgerichteten Sockels 10 aus. Der behälterseitige Gegenflansch 9 wurzelt im oberen Ende eines vertikal orientierten Stutzens 11 des Behälters 2. Die Flansche 8, 9 weisen in Deckung bringbare Flanschbohrungen auf. Flansch 8 und Gegenflansch 9 sind unter Nutzungen solcher Bohrungen über Befestigungsschrauben miteinander verbunden. Dies geschieht unter Zwischenfassen eines flanschparallelen Randes 13 der Berstscheibe 4.

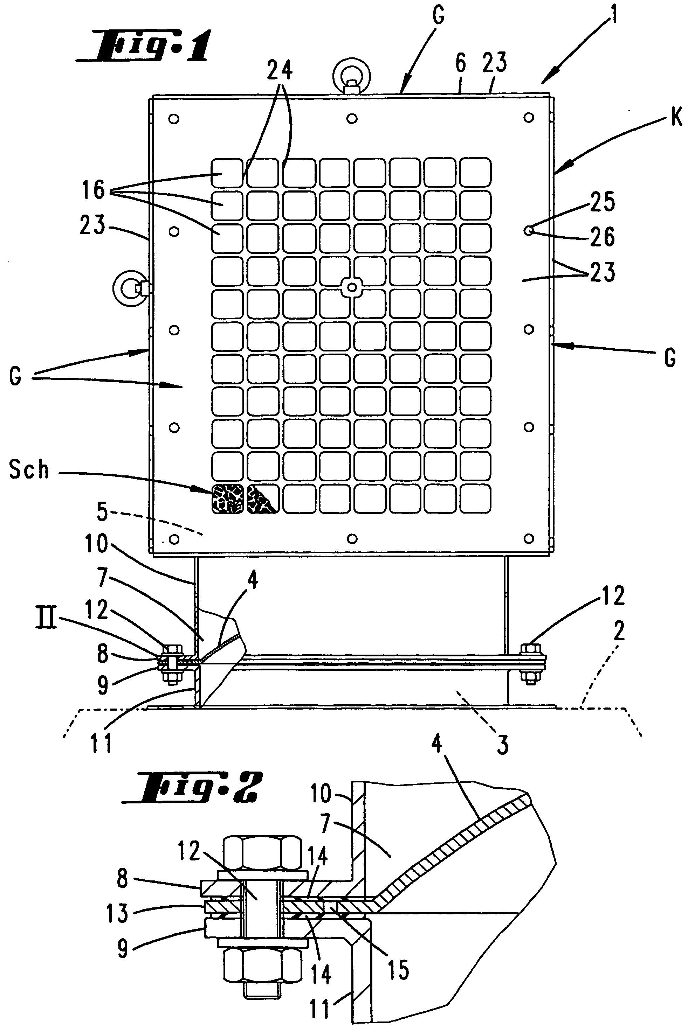

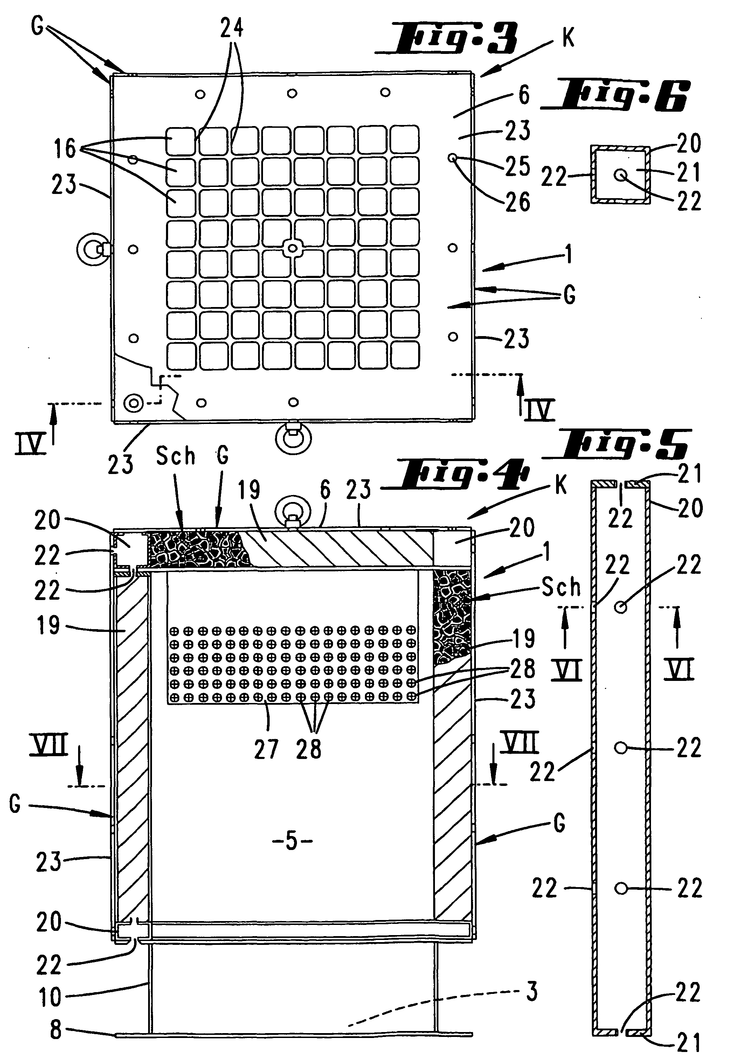

Wie Fig.2 entnehmbar handelt es sich um eine abgedichtete Fesselungsstelle. Die beidseitig des Randes 13 sich erstreckenden Dichtlagen sind mit 14 bezeichnet. Die erstrecken sich nahezu über die gesamte Fesselungsbreite des Randes 13.

Noch im Fesselungsbereich liegend, befindet sich am Rand 13 eine Sollreißstelle 15. Die erstreckt sich umrissfolgend, also bei einer kreisrunden Berstscheibe 4 entsprechend kreisbogenförmig oder bei einer mehreckigen Berstscheibe 4 entsprechend in dieser Kontur verlaufend. Sie (15) ist in bekannter Weise durch Materialbrücken im Randverbund stehend. Durch einen längeren umlaufenden Abschnitt einer solchen Brücke läßt sich eine scharnierartige Fesselungstelle erzielen, so dass ein geordnetes klappdeckelartiges Einschlagen der Berstscheibe 4 vorgegeben ist.

Aus dem Fesselungsbereich intern austretend geht die Berstscheibe in eine flache domförmige Wölbung über. Die Wölbungsrichtung liegt in Beaufschlagungsrichtung der Berstscheibe 4 gehend, also in Richtung des Korbes K bzw. seines Hohlraumes 5.

Der Sockel 10 kann, wie aus den Figuren 11 und 13 ersichtlich, Adapterfunktion erfüllen, abdeckend unterschiedliche Querschnittsbereiche der behälterseitigen Anschlussmittel sprich Stutzen 11.

Die gasdurchlässigen Wände des Korbes K berücksichtigen einen feinporigen und einen grobmaschigen Bereich. So sind die gasdurchströmbaren Wände au-ßenseitig als grobmaschiges Gitter G ausgebildet und innenseitig mit offenporigem Metallschaum Sch. Die Gitter G sind zumindest im Bereich der Lochmaschen 16 des Gitters G abdeckend hinterlegt. Der offenporige, bevorzugt relativ feinporige Metallschaum Sch besitzt ein homogenes Schaumgerüst mit polydirektionalen Stegen, welche die Porenrahmungen sowie Übergangspforten zwischen den Porenkavitäten bilden.

Ein Ausschnitt einer Platte aus Metallschaum Sch ist in Fig. 9 anschaulich, praktisch fotografisch, wiedergegeben. Die hellere Stegen 17 umgeben unterbrechend und verzweigend die im Wesentlichen dunkel erscheinenden Inseln, stellend die Poren 18 des Schaumgerüsts.

Die besagte Struktur des Metallschaums Sch ist auch noch so naturalistisch im Bereich der Wände sowie der Decke 6 des Korbes K zumindest partiell wiedergegeben, ansonsten durch Schraffur symbolisch dargestellt.

Der Metallschaum Sch ist in Form von Platten 19 gestaltet. Diese Platten 19 sind selbsttragend, bedürfen also nicht eines besonderen Stützgerüstes an sich. Die Metallschaum-Platten 19 bestehen aus Aluminium mit einer Porenweite von 10 bis 30, vorzugsweise 20 ppi.

Was die Dicke der Metallschaum-Platte 19 betrifft, so liegt diese zwischen 10 und 60 mm, vorzugsweise zwischen 30 und 50 mm, ganz bevorzugt bei 40 mm.

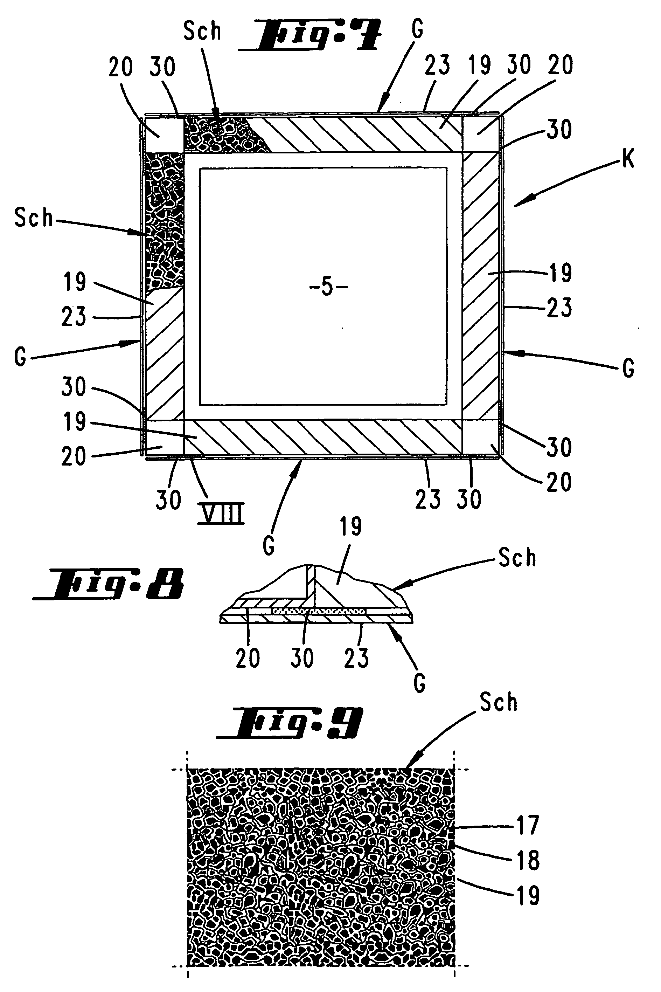

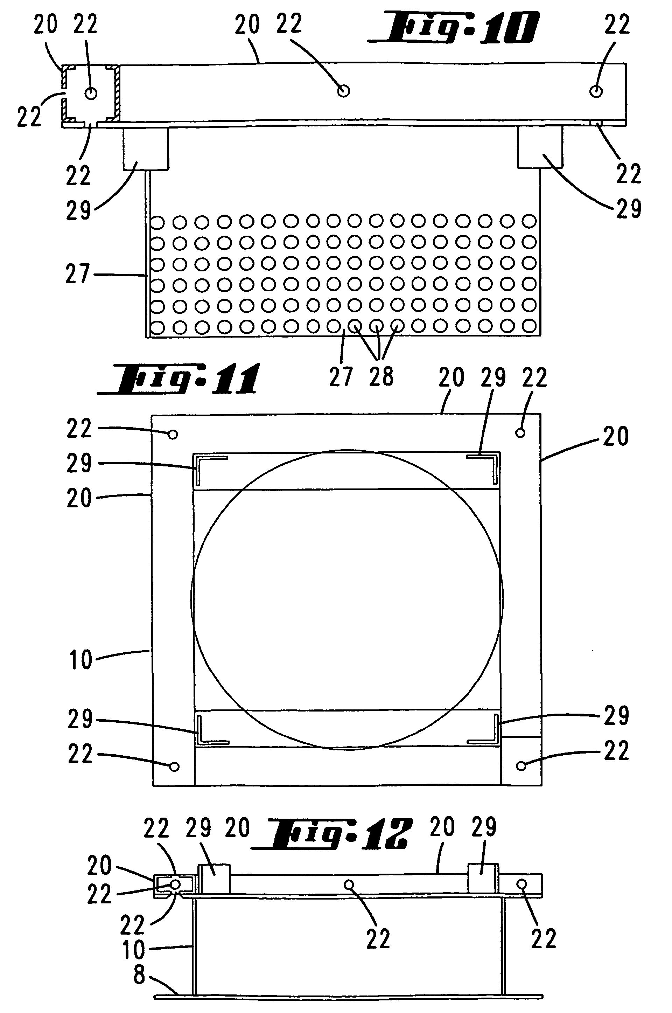

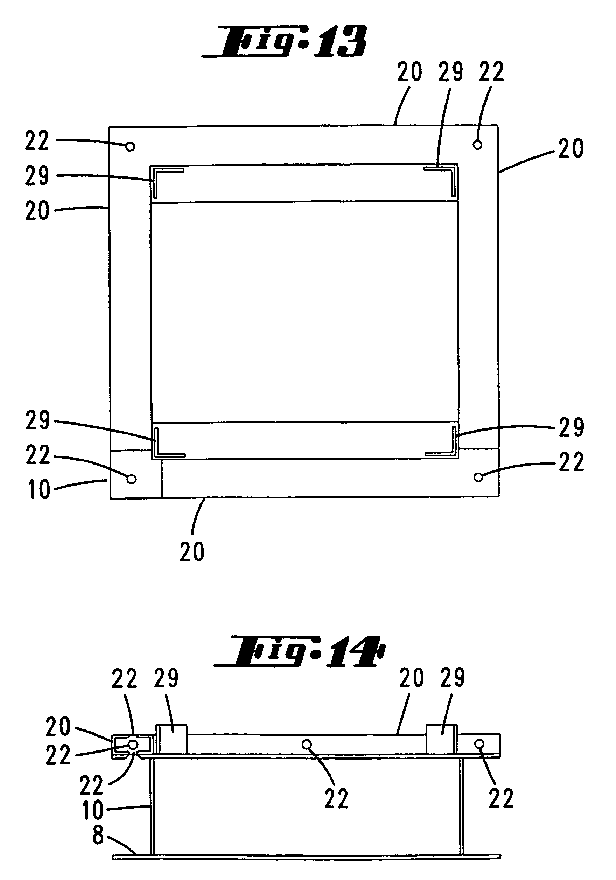

Was den konkreteren Korbaufbau angeht, so liegt diesem eine Rohrrahmenkonstruktion zugrunde in den Abmessungen des erstrebten, den Hohlraum 5 umschreibenden Gehäuses des Korbes K. Besagte Rohrrahmenkonstrüktion setzt sich zusammen aus abgelängten Rahmenschenkeln 20 eines Kastenprofils. Es ist bevorzugt quadratischen Querschnitts. Ein solcher Rahmenschenkel 20 ist in den Figuren 5 und 6 isoliert wiedergegeben. Aus diesen Rahmenschenkeln 20 werden Ecksäulen des im Querschnitt quadratischen Korbes errichtet, ebenso untere Schwellen und obere Aufleger. Wie Fig. 4 zeigt, können auch abweichende Profilquerschnitte der Rahmenschenkel Verwendung finden, beispielsweise in dem Sockel 10 zugewandten Bereich. Die Profilbreite ist jedoch identisch.

Die Rahmenschenkel 20 können, wie aus Fig.6 ersichtlich, durch Stirnplatten 21 geschlossen sein, berücksichtigend zum Teil gewindeaufweisende Befestigungslöcher 22. Die sind auch an den Längsseiten der Rahmenschenkel 20 in montagepassender Weise ausgeführt. So wird eine Verschraubung untereinander angewandt und ebenso auch für die das grobmaschige Gitter G aufweisenden Außenplatten 23 des Korbes K.

Die praktisch durchweg quadratische Querschnittsgestalt der Rahmenschenkel 20 eröffnet im Rücken der aufschraubbaren Außenplatten 23 des Korbes K gleichsam Unterbringungsschächte für die den Hohlraum 5 des Korbes K auskleidenden Metallschaum-Platten 19. Solche Schächte erstrecken sich zwischen den Rahmenschenkeln sowohl bezüglich der Wände als auch der Decke 6 des Gehäuses. Die im Hinblick auf die Fachkontur ausfüllend bis selbstklemmend halternden Platten 19 sind entsprechend zugeschnitten.

Die Außenplatte 23 sowohl in Anwendung bezüglich der Wände als auch der Decke 6 stellt bezüglich der ersteren ein Rechteck-Gitter G, bezüglich der Decke 6 ein umrissmäßig quadratisches Gitter G. Beide Verkörperungen weisen eine quadratische Lochmasche 16 zwischen 30 und 40 mm Seitenlänge auf. Die Ekken sind konkav ausgerundet. Die Gitterstege 24 zwischen den Lochmaschen 16 besitzen eine Breite von 2 bis 5 mm. Die längere Rechteckseite der Wände verläuft vertikal.

Die kongruent zu den Befestigungslöchern 22 der Rahmenschenkel etc. liegende Bohrungen 25 der Außenplatten 23 durchsetzende Befestigungsschrauben sind mit 26 bezeichnet.

Dem Korb K bzw. seinem Gehäuse ist im Hohlraum 5 untergebracht eine innere Gitterplatte 27 zugeordnet. Die geht, an der Rohrrahmenkonstruktion gehaltert, von der Unterseite der Decke 6 des Gehäuses aus. Sie ist perforiert und bietet gittermäßig eine geringere Öffnungsfläche als die der beschriebenen Außenplatte 23.

Die Gitterung, gleichfalls gestellt von Lochmaschen 28, ist kreisrunder Kontur. Sie erstreckt sich gemäß Darstellung Fig.4 über etwas mehr als die untere Hälfte der Fläche der vertikal ausgerichteten Gitterplatte 27.

Die Gitterplatte 27 kann in Bezug auf die Metallschaum-Platten 19 von innen her zugleich abstützend wirken, fungiert andererseits aber auch als Prallwand in Bezug auf die von unten her einbrechende eine Auswärtskomponente entfachende Druckwelle. Bevorzugt ist aber ein noch hinterströmbarer Freistand zur Metallschaum-Platte 19.

Um hier eine gleichmäßige Ausstattung zu bekommen, ist es günstig, vier solcher innerer Gitterplatten 27 vorzusehen. Dabei erweist es sich als Vorteil, wenn die innere Gitterplatte Winkelform aufweist, also über Eck gefaltet weitergeht in eine benachbarte durchströmbare Wand. Die rechtwinklige Gestalt ist aus Fig. 4 vorstellbar, indem der linksseitige Winkelschenkel in seiner Stirnfläche dargestellt ist.

Erkennbar ragen die gewinkelten, inneren Gitterplatten 27 nur über eine vertikale Teillänge des Korbes K. Das Verhältnis ist so, dass von innen her für eine Direktbeaufschlagung der größere Flächenbereich des Metallschaumes Sch dargeboten ist.

Sowohl die Partien der deckenseitigen Rohrrahmenkonstruktion als auch solche des Sockels 11 sind mit Anschlagwinkeln 29 versehen, welche eckanschmiegend eine direkte Abstützung der Metallschaum-Platten 19 hergeben.

In Bezug auf die Figuren 7 und 8 bleibt noch auf eine Silikondichtung 30 hinzuweisen. Die übt zugleich Halterungsfunktion aus. Verwirklicht ist diese durch einen im Übergangsbereich von Metallschaum-Platten 19 und den Rahmenschenkeln 20 der Rohrrahmenkonstruktion angeordnete Lage aus diesem Material zwischen Metallschaum-Platte 19 und Außenplatte 23. Es liegt erkennbar eine fugenschließende Außenabdichtung zwischen der besagten Rohrrahmenkonstruktion und dem geschützt eingetaschten sowie an der Außenplatte 23 nach außen hin abgestützten Metallschaum Sch vor. Die Funktion der beschriebenen Druckentlastungsvorrichtung 1 ist, kurz zusammengefasst, wie folgt: Der Eingang, d.h. die Öffnung 7 des Gehäuses ist durch die Berstscheibe 4 geschlossen. Bei Aufreißen der Berstscheibe 4 durch eine Explosion treffen Flamme und Staub auf das als Metallschaum Sch ausgebildete, hohlraumauskleidende Wandmaterial. Beim Durchströmen des Metallschaumes Sch wird dem Reaktionsgemisch bis zum Durchtritt auf die Außenseite des Korbes K so viel Wärme entzogen, dass die Mindestzündenergie unterschritten wird. Das Ergebnis ist ein Ablöschen der Flamme. Es liegt eine Speicherung der Wärmeenergie vor in Art eines Wärmetauschers.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Druckentlastungsvorrichtung (1) mit einer eine Öffnung (3) eines Behälters (2) oder dergleichen verschließenden Berstscheibe (4), die bei Überschreiten einer vorbestimmten Druckdifferenz in einen Hohlraum (5) eines behälteraussenseitig angeordneten Korbes (K) öffnet, **dadurch gekennzeichnet, dass** der Korb (K), in dessen Hohlraum die Berstscheibe (4) bei Überschreiten des vorbestimmten Druckes öffnet, gasdurchlässige Wände aufweist, die durch Wärmeabfuhr flammsperrend wirken, dass die gasdurchströmbaren Wände aussenseitig als grobmaschiges Gitter (G) ausgebildet sind, wobei die Gitter (G) von offenporigem Metallschaum (Sch) hinterlegt sind.

2. Druckentlastungsvorrichtung nach Anspruch 1, **dadurch gekennzeichnet, dass** der Korb (K) ein quaderförmiges, fünfseitig gasdurchlässiges Gehäuse ist.

3. Druckentlastungsvorrichtung nach einem oder mehreren der vorhergehenden Ansprüche, **dadurch gekennzeichnet, dass** eine der Berstscheibe (4) zugeordnete Öffnung (7) des Korbes (K) einen Flansch (8) ausbildet der unter randseitigem Zwischenfassen der Berstscheibe (4) mit einem behälterseitigen Gegenflansch (9) verbunden ist.

4. Druckentlastungsvorrichtung nach einem oder mehreren der vorhergehenden Ansprüche, **gekennzeichnet durch** einen der Öffnung (7) des Korbes (K) zugeordneten Sockel (10).

5. Druckentlastungsvorrichtung nach einem oder mehreren der vorhergehenden Ansprüche, **dadurch gekennzeichnet, dass** das grobmaschige Gitter (G) von einer Außenplatte (23) ausgebildet wird.

6. Druckentlastungsvorrichtung nach einem oder mehreren der vorhergehenden Ansprüche, **dadurch gekennzeichnet, dass** das Gehäuse eine Rohrrahmenkonstruktion ist mit an den Rahmenschenkeln (20) angeschraubten Außenplatten (23) und zwischen den Rahmenschenkeln (20) sich erstreckenden Metallschaum-Platten (19).

7. Druckentlastungsvorrichtung nach einem oder mehreren der vorhergehenden Ansprüche, **dadurch gekennzeichnet, dass** die Metallschaum-Platten (19) aus Aluminium bestehen mit einer Porenweite von 10 bis 30, vorzugsweise 20 ppi.

8. Druckentlastungsvorrichtung nach einem oder mehreren der vorhergehenden Ansprüche, **dadurch gekennzeichnet, dass** die Dicke der Metallschaum-Platte (19) zwischen 10 und 60 mm, vorzugsweise zwischen 30 und 50 mm, ganz bevorzugt bei 40 mm liegt.

9. Druckentlastungsvorrichtung nach einem oder mehreren der vorhergehenden Ansprüche, **dadurch gekennzeichnet, dass** die Außenplatte (23) ein Rechteck-Gitter mit einer Weite der Lochmaschen (16) zwischen 30 und 40 mm hat.

10. Druckentlastungsvorrichtung nach einem oder mehreren der vorhergehenden Ansprüche, **dadurch gekennzeichnet, dass** die Gitterstege (24) zwischen den Lochmaschen (16) des Gitters (G) eine Breite von 3 bis 5 mm aufweisen.

11. Druckentlastungsvorrichtung nach einem oder mehreren der vorhergehenden Ansprüche, **gekennzeichnet durch** eine innere Gitterplatte (27) mit einer geringeren Öffnungsfläche als die der Außenplatte (23).

12. Druckentlastungsvorrichtung nach einem oder mehreren der vorhergehenden Ansprüche, **dadurch gekennzeichnet, dass** die Gitterplatte (27) Winkelform aufweist.

13. Druckentlastungsvorrichtung nach einem oder mehreren der vorhergehenden Ansprüche, **dadurch gekennzeichnet, dass** die inneren Gitterplatten (27) von der Decke (6) des Gehäuses ausgehen und sich nur über eine vertikale Teillänge desselben erstrecken.

14. Druckentlastungsvorrichtung nach einem oder mehreren der vorhergehenden Ansprüche, **gekennzeichnet durch** eine im Übergangsbereich von Metallschaum-Platte (19) und Rahmenschenkeln (20) der Rohrrahmenkonstruktion angeordnete Silikondichtung (30) zwischen Metallschaum-Platte (19) und Außenplatte (23).

15. Druckentlastungsvorrichtung nach einem oder mehreren der vorhergehenden Ansprüche, **dadurch gekennzeichnet, dass** die Gitter (G) zumindest im Bereich der Lochmaschen (16) des Gitters (G) abdeckend mit offenporigem Metallschaum (Sch) hinterlegt sind.

16. Druckentlastungsvorrichtung nach einem oder mehreren der vorhergehenden Ansprüche, **dadurch gekennzeichnet, dass** der Metallschaum (Sch) ein homogenes Schaumgerüst mit polydirektionalen Stegen besitzt.

17. Druckentlastungsvorrichtung nach einem oder mehreren der vorhergehenden Ansprüche, **dadurch gekennzeichnet, dass** hinsichtlich der inneren Gitterplatten (27) das Verhältnis so ist, dass von innen her für eine Direktbeaufschlagung der größere Flächenbereich des Metallschaumes (Sch) dargeboten ist.

18. Druckentlastungsvorrichtung nach einem oder mehreren der vorhergehenden Ansprüche, **dadurch gekennzeichnet, dass** der Metallschaum (Sch) in Form von selbsttragenden Platten (19) gestaltet ist.

19. Druckentlastungsvorrichtung nach einem oder mehreren der vorhergehenden Ansprüche, **dadurch gekennzeichnet, dass** sich am Rand (13) der Berstscheibe (4) eine Sollreisslinie befindet.

## Claims

1. Pressure relief device (1) having a rupture disc (4), which closes an opening (3) in a vessel (2) or the like and opens into a cavity (5) in a basket (K) disposed outside the vessel when a predetermined pressure difference is exceeded, **characterized in that** the basket (K), into the cavity of which the rupture disc (4) opens when the predetermined pressure is exceeded, has gas-permeable walls which act as flame barriers through the dissipation of heat, and **in that** the walls through which gas can flow, on the outer side, are in the form of a coarse-mesh grid (G), the grid (G) being backed with open-cell metal foam (Sch).

2. Pressure relief device according to Claim 1, **characterized in that** the basket (K) is a cuboidal housing which is gas-permeable on five sides.

3. Pressure relief device according to one or more of the preceding claims, **characterized in that** an opening (7), associated with the rupture disc (4), in the basket (K) forms a flange (8) which is connected to a vessel-side mating flange (9), with the rupture disc (4) clamped between them at the edges.

4. Pressure relief device according to one or more of the preceding claims, **characterized by** a pedestal (10) associated with the opening (7) in the basket (K).

5. Pressure relief device according to one or more of the preceding claims, **characterized in that** the coarse-mesh grid (G) is formed by an outer plate (23).

6. Pressure relief device according to one or more of the preceding claims, **characterized in that** the housing is a tubular frame structure with outer plates (23) screwed onto the frame limbs (20) and metal foam plates (19) extending between the frame limbs (20).

7. Pressure relief device according to one or more of the preceding claims, **characterized in that** the metal foam plates (19) consist of aluminium with a pore width of from 10 to 30, preferably 20 ppi.

8. Pressure relief device according to one or more of the preceding claims, **characterized in that** the thickness of the metal foam plate (19) is between 10 and 60 mm, preferably between 30 and 50 mm, particularly preferably is 40 mm.

9. Pressure relief device according to one or more of the preceding claims, **characterized in that** the outer plate (23) has a rectangular grid with a width of the mesh holes (16) of between 30 and 40 mm.

10. Pressure relief device according to one or more of the preceding claims, **characterized in that** the grid webs (24) between the mesh holes (16) of the grid (G) have a width of from 3 to 5 mm.

11. Pressure relief device according to one or more of the preceding claims, **characterized by** an inner grid plate (27) with a smaller opening surface area than that of the outer plate (23).

12. Pressure relief device according to one or more of the preceding claims, **characterized in that** the grid plate (27) is angular in form.

13. Pressure relief device according to one or more of the preceding claims, **characterized in that** the inner grid plates (27) start from the cover (6) of the housing and extend only over a partial vertical length of the housing.

14. Pressure relief device according to one or more of the preceding claims, **characterized by** a silicone seal (30), which is disposed in the transition region of metal foam plate (19) and frame limbs (20) of the tubular frame structure, between metal foam plate (19) and outer plate (23).

15. Pressure relief device according to one or more of the preceding claims, **characterized in that** the grids (G) are backed with a covering of open-cell metal foam (Sch) at least in the region of the mesh holes (16) of the grid (G).

16. Pressure relief device according to one or more of the preceding claims, **characterized in that** the metal foam (Sch) has a homogeneous foam skeleton with polydirectional webs.

17. Pressure relief device according to one or more of the preceding claims, **characterized in that** the ratio with respect to the inner grid plates (27) is such that the larger surface region of the metal foam (Sch) is available for direct exposure from the inner side.

18. Pressure relief device according to one or more of the preceding claims, **characterized in that** the metal foam (Sch) is configured in the form of self-supporting plates (19).

19. Pressure relief device according to one or more of the preceding claims, **characterized in that** a desired tear line is located at the edge (13) of the rupture disc (4).

## Revendications

1. Dispositif de dépressurisation (1) avec un disque de rupture (4) fermant une ouverture (3) d'un contenant (2) ou similaire, qui, lorsqu'une différence de pression prédéfinie est dépassée, s'ouvre dans un espace creux (5) d'un panier (K) disposé à l'extérieur du contenant, **caractérisé en ce que** le panier (K), dans l'espace creux duquel le disque de rupture (4) s'ouvre lorsque la pression prédéfinie est dépassée, comporte des parois perméables au gaz, qui agissent comme pare-flammes par évacuation de chaleur, **en ce que** les parois perméables au gaz sont réalisées du côté extérieur comme des grilles (G) à grosses mailles, les grilles (G) étant doublées par de la mousse métallique (Sch) à pores ouverts.

2. Dispositif de dépressurisation selon la revendication 1, **caractérisé en ce que** le panier (K) est un corps parallélépipédique, à cinq côtés laissant passer le gaz.

3. Dispositif de dépressurisation selon l'une ou plusieurs des revendications précédentes, **caractérisé en ce qu'**une ouverture (7) du panier (K) associée au disque de rupture (4) forme une bride (8), qui est reliée, avec montage de serrage intercalaire du disque de rupture (4) sur les bords, à une contre bride (9) du côté contenant.

4. Dispositif de dépressurisation selon l'une ou plusieurs des revendications précédentes, **caractérisé par** un socle (10) associé à l'ouverture (7) du panier (K).

5. Dispositif de dépressurisation selon l'une ou plusieurs des revendications précédentes, **caractérisé en ce que** la grille (G) à grosses mailles est formée par une plaque extérieure (23).

6. Dispositif de dépressurisation selon l'une ou plusieurs des revendications précédentes, **caractérisé en ce que** le corps ou boîtier est une structure de châssis tubulaire avec des plaques extérieures (23) fixées par des vis aux montants ou branches de châssis (20) et des plaques en mousse métallique (19) s'étendant entre les montants de châssis (20).

7. Dispositif de dépressurisation selon l'une ou plusieurs des revendications précédentes, **caractérisé en ce que** les plaques de mousse métallique (19) se composent d'aluminium avec une largeur de pore de 10 à 30, de préférence de 20 ppi.

8. Dispositif de dépressurisation selon l'une ou plusieurs des revendications précédentes, **caractérisé en ce que** l'épaisseur de la plaque en mousse métallique (19) se situe entre 10 et 60 mm, de préférence entre 30 et 50 mm, de manière plus préférée à 40 mm.

9. Dispositif de dépressurisation selon l'une ou plusieurs des revendications précédentes, **caractérisé en ce que** la plaque extérieure (23) comporte une grille rectangulaire avec une largeur de trous de mailles (16) entre 30 et 40 mm.

10. Dispositif de dépressurisation selon l'une ou plusieurs des revendications précédentes, **caractérisé en ce que** les branches ou traverses de grille (24) entre les trous de mailles (16) de la grille (G) présentent une largeur de 3 à 5 mm.

11. Dispositif de dépressurisation selon l'une ou plusieurs des revendications précédentes, **caractérisé par** une plaque intérieure de grille (27) avec une surface d'ouverture inférieure à celle de la plaque extérieure (23).

12. Dispositif de dépressurisation selon l'une ou plusieurs des revendications précédentes, **caractérisé en ce que** la plaque de grille (27) présente une forme angulaire.

13. Dispositif de dépressurisation selon l'une ou plusieurs des revendications précédentes, **caractérisé en ce que** les plaques de grille (27) intérieures partent de la couverture (6) du corps ou boîtier et s'étendent seulement sur une longueur partielle verticale de celui-ci.

14. Dispositif de dépressurisation selon l'une ou plusieurs des revendications précédentes, **caractérisé par** une étanchéité en silicone (30) entre la plaque de mousse métallique (19) et la plaque extérieure (23), étanchéité disposée dans la zone de transition entre la plaque de mousse métallique (19) et les montants ou branches de châssis (20) de la structure tubulaire de châssis.

15. Dispositif de dépressurisation selon l'une ou plusieurs des revendications précédentes, **caractérisé en ce que** les grilles (G) sont doublées au moins dans la zone des trous de mailles (16) de la grille (G) en recouvrement avec de la mousse métallique (Sch) à pores ouverts.

16. Dispositif de dépressurisation selon l'une ou plusieurs des revendications précédentes, **caractérisé en ce que** la mousse métallique (Sch) possède une armature homogène en mousse avec des traverses ou branches polydirectionnelles.

17. Dispositif de dépressurisation selon l'une ou plusieurs des revendications précédentes, **caractérisé en ce que** par rapport aux plaques intérieures (27) de grille, le rapport est tel qu'est offerte la plus grande zone de surface de la mousse métallique (Sch) de l'intérieur pour une sollicitation directe.

18. Dispositif de dépressurisation selon l'une ou plusieurs des revendications précédentes, **caractérisé en ce que** la mousse métallique (Sch) est réalisée sous forme de plaques autoportantes (19).

19. Dispositif de dépressurisation selon l'une ou plusieurs des revendications précédentes, **caractérisé en ce qu'**une ligne préférentielle de déchirure se trouve au bord (13) du disque de rupture (4).
